# EUROPEAN PATENT SPECIFICATION

(11) **EP 2 738 439 B1**
(45) Date of publication and mention of the grant of the patent: **03.04.2019**
(21) Application number: 12194838.4
(22) Date of filing: 29.11.2012
(51) Int. Cl.: F16L 55/11, G01M 3/02

(54) **ANCHOR APPARATUS**
Verankerungsvorrichtung
Appareil d'ancrage

(43) Date of publication of application: 04.06.2014
(73) Proprietor: IK-UK Limited, Co Durham DL5 6SH (GB)
(72) Inventor: Short, Ian, Darlington, County Durham DL1 4NF (GB); Robinson, Paul Edward, Redcar, Cleveland TS10 4RB (GB)
(74) Representative: Murgitroyd & Company

(56) References cited:
- US-A1- 2009 229 424
- US-A1- 2010 133 864
- US-A1- 2011 278 022

## Description

The present invention relates to an anchor apparatus for anchoring a seal in a curved bore of a pipe, and relates particularly, but not exclusively, to an anchor apparatus for anchoring a seal in a curved bore of a pipe to enable pressure testing of a section of pipe.

Anchor apparatus adapted to be anchored in pipes for sealing pipes are known to enable pressure testing of sections of pipe, see for example US2011/0278022. However, in the case of curved sections of pipe, apparatus capable of satisfactorily anchoring in the bore of the pipe for sealing the pipe are not available. As a result, in order to carry out pressure testing of a section of pipe, time consuming welding of sections to the pipe bore must be carried out. This significantly increases the difficulty and cost of carrying out pressure testing of sections of pipe.

Preferred embodiments of the present invention seek to overcome one or more of the above disadvantages of the prior art.

According to the present invention, there is provided an anchor apparatus according to claim 1.

By providing a plurality of anchor members adapted to be moved relative to at least part of the body into engagement with an internal surface of a curved section of pipe, and at least one convex surface and at least one concave surface, provided on at least one respective anchor member, and adapted to be urged into engagement with the internal surface by movement of the corresponding anchor member into engagement with the internal surface, this provides the advantage of increasing the area of contact between the anchor members and the internal surface of the pipe, giving more secure anchoring for a given size of anchor apparatus, while improving matching of the profile of the anchor members to the internal surface of the pipe.

In a preferred embodiment, a plurality of said anchor members are slidably mounted relative to said body and are adapted to engage at least one respective inclined surface on said body to move into engagement with said internal surface.

The body may comprise a first body member and a second body member axially slidably mounted to said first body member and having at least one said inclined surface thereon.

This provides the advantage of enabling the second body member to actuate the seal engaging means by sliding relative to the first body member, thereby enabling a single actuator mechanism to actuate the seal engaging means and the anchor members.

The apparatus may further comprise biasing means for urging at least one said anchor member away from said internal surface.

The biasing means may comprise at least one resilient member for retaining at least one said anchor member on said body.

This provides the advantage of preventing the anchor member from becoming detached from the body, while also assisting in separating the apparatus from the internal bore of the pipe after use.

Said body may be elongate.

This provides the advantage of enabling part of the first body member to protrude from the curved section of pipe, thereby enabling actuation of the seal engaging means and/or first and second anchor members from the exterior of the pipe.

In a preferred embodiment, said seal engaging means comprises at least one first seal engaging member and at least one second seal engaging member adapted to slide axially relative to at least part of said body to compress at least one respective sealing member between said first and second seal engaging members to urge said sealing member into engagement with said internal surface.

At least one said first seal engaging member may be adapted to cooperate with at least one said second seal engaging member to define a respective pair of surfaces diverging from each other in an increasing radial direction from said body.

This provides the advantage of enabling more efficient radial expansion of the sealing member.

The apparatus may further comprise actuator means for causing a plurality of said anchor members to be urged into engagement with said internal surface.

The actuator means may comprise at least one first portion adapted to be engaged by a user and at least one second portion adapted to have an axial component of motion relative to the body as a result of engagement of said first portion by said user.

This provides the advantage of enabling the actuator to be operated from outside of the pipe.

The apparatus may further comprise at least one release element, offset from a radial centre of the apparatus in use, and adapted to be engaged by a user to release the apparatus from said internal surface.

The apparatus my further comprise at least one sealing member adapted to be urged into engagement with said internal surface.

A preferred embodiment of the invention will now be described, by way of example only and not in any limitative sense, with reference to the accompanying drawings, in which:-
Figure 1 is a perspective view of an anchor apparatus embodying the present invention;
Figure 2 is an end view of the apparatus of Figure 1 ;
Figure 3 is a cross sectional view along the line A-A in Figure 2 ;
Figure 4 is a perspective view of a curved pipe section with the apparatus of Figure 1 located therein; and
Figure 5 is a cross sectional view along the line B-B in Figure 4.

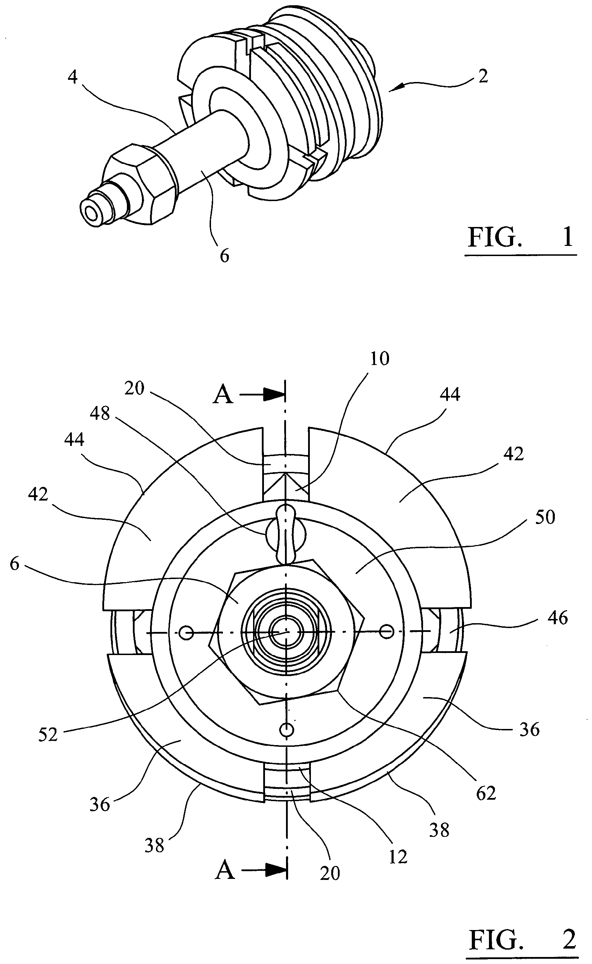

Referring to Figures 1 to 3, an anchor apparatus 2 embodying the present invention has a body 4 comprising an elongate first body member 6 having a first screw threaded section 8 and a second body member 10 axially slidably mounted to the first body member 6 and having inclined surfaces 12 thereon. A nut 14 for holding the components of the apparatus 2 in place on the first body member 6 is mounted to a second screw threaded section 16 of the first body member 6.

A seal engaging means includes a hub member 18, slidably mounted to the first body member 6 and abutting the nut 14, and a seal compressing member 20 slidably mounted to the first body member 6. The hub member 18 is provided with an annular groove 22 containing an O-ring 24 and an anti-extrusion ring 26. An elastomeric annular sealing member 28 is located between divergent surfaces 30, 32 on the hub member 18 and seal compressing member 20 respectively such that movement of the seal compressing member 20 towards the hub member 18 causes radially outward deformation of the seal member 28.

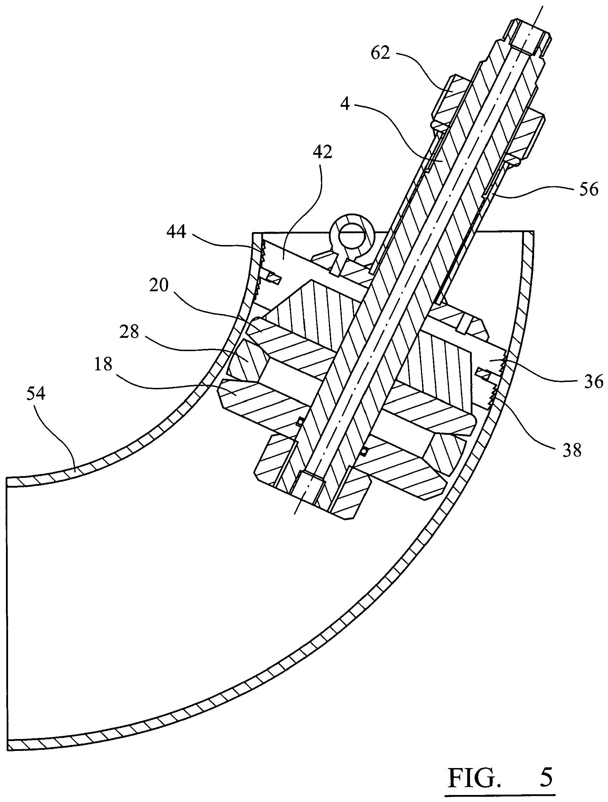

The second body member 10 abuts the seal compressing member 20 and its inclined faces 12 cooperate with corresponding inclined faces 34 on a pair of first jaws 36, defining a first part of an ellipse and having respective serrated convex outer surfaces 38, and inclined faces 40 on a pair of second jaws 42 defining a second part of the ellipse and having respective serrated concave outer surfaces 44. The first 36 and second 42 jaws are held in position on the body 4 by means of a polyurethane retaining band 46. An eye bolt 48 is mounted to a plate 50 abutting the first 36 and second 42 jaws, and is offset from longitudinal axis 52 of the apparatus 2 to enable engagement by a user to remove the apparatus 2 from the bore of a curved section 54 of pipe (Figure 5).

An actuator mechanism includes a spacer 56, slidably mounted relative to the first body member 6 and engaging a groove 58 in the plate 50, an end plate 60, also slidably mounted relative to the first body member 6, and a threaded actuator member 62 mounted to the first threaded portion 8 of first body member 6 such that the plate 50 is moveable in an axial direction along the first body member 6 by means of rotation of the actuator member 62 relative to the first body portion 6.

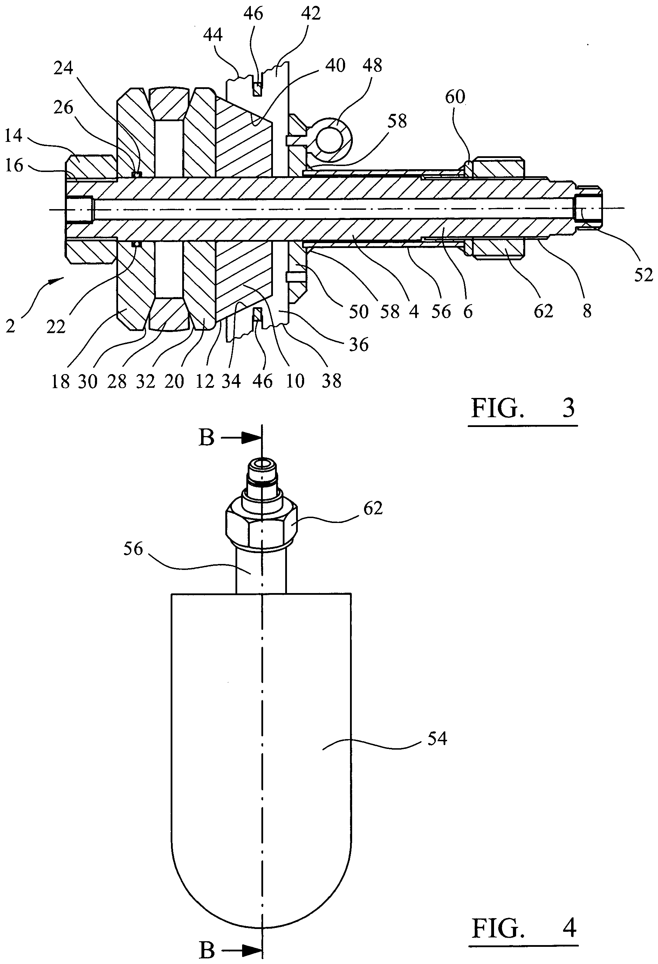

The operation of the apparatus 2 shown in Figures 1 to 3 will now be described with reference to Figures 4 and 5.

In order to seal the curved section 54 of pipe in order to enable pressure testing of the pipe, the apparatus 2 is located in a bend of the pipe such that the first threaded portion 8 of the first body member 6 and the actuator member 62 protrude out of the end of the length 54 of pipe. The apparatus 2 is positioned so that the convex surfaces 38 of the first anchor members 36 engage the radially outer part of the internal surface of the pipe, and the concave surfaces 44 of the second anchor members 42 engage the radially inner surface of the pipe. The actuator member 62 is then rotated relative to the first body member 6, as a result of which the spacer 58 moves axially along the first body member 6 and causes the inclined surfaces 12 of the second body member 10 to urge the first 36 and second 42 anchor members radially outwards into engagement with the internal surface 54 of the pipe. At the same time, the seal compressing member 20 is urged towards the abutment member 18, as a result of which the sealing member 28 is compressed between the seal compressing member 20 and abutment member 18 to cause the sealing member 28 to expand radially outwards to form a seal with the internal surface 54 of the pipe. The pipe is then sealed and pressure testing can be carried out.

In order to release the apparatus 2 from the pipe, the actuator member 62 is rotated in an anticlockwise direction and the eye bolt 48 is engaged and tensile force applied thereto. As a result, the first 36 and second 42 anchor members can move out of engagement with the internal surface 54 of the pipe, and the polyurethane retaining band 46 moves the first 36 and second 42 anchor members radially inwards. At the same time, the seal compressing member 20 can move axially away from the abutment member 18, as a result of which the sealing member 28 can contract radially to be released from the internal surface 54 of the pipe.

It will be appreciated by persons skilled in the art that the above embodiment has been described by way of example only and not in any limitative sense, and that various alterations and modifications are possible without departure from the scope of the invention as defined by the appended claims. For example, although the above described embodiment describes first 36 and second 42 jaws having respective convex 38 and concave 44 outer surfaces, it will be appreciated by persons skilled in the art that convex and concave outer surfaces can also be provided on individual jaws.

## Claims

1. An anchor apparatus (2) for anchoring a sealing member (28) to an internal surface of a curved section of pipe, the apparatus comprising:-
a body (4);
a plurality of anchor members (36) adapted to be moved relative to at least part of the body into engagement with an internal surface of a curved section of pipe;
seal engaging means (18, 20) for urging at least one sealing member (28) into engagement with said internal surface;
**characterised in that** it further comprises:
at least one convex surface (38), provided on at least a first of said anchor members (36), and adapted to be urged into engagement with the radially outer part of said internal surface of the curved section of pipe by movement of the corresponding said first anchor member (36) into engagement with said internal surface;
at least one concave surface (44), provided on at least a second of said anchor members (36), and adapted to be urged into engagement with the radially inner part of said internal surface of the curved section of pipe by movement of the corresponding said second anchor member (36) into engagement with said internal surface, wherein said apparatus (2) is adapted to be retained in position in engagement with said internal surface by means of engagement of at least one said convex surface and at least one said concave surface with said internal surface.

2. An apparatus according to claim 1, wherein a plurality of said anchor members (36) are slidably mounted relative to said body and are adapted to engage at least one respective inclined surface on said body to move into engagement with said internal surface.

3. An apparatus according to claim 2, wherein said body (4) comprises a first body member (6) and a second body member (10) axially slidably mounted to said first body member and having at least one said inclined surface (12) thereon.

4. An apparatus according to any one of the preceding claims, further comprising biasing means (46) for urging at least one said anchor member away from said internal surface.

5. An apparatus according to claim 4, wherein said biasing means comprises at least one resilient member (46) for retaining at least one said anchor member on said body.

6. An apparatus according to any one of the preceding claims, wherein said body (4) is elongate.

7. An apparatus according to any one of the preceding claims, wherein said seal engaging means (18, 20) comprises at least one first seal engaging member (18) and at least one second seal engaging member (20) adapted to slide axially relative to at least part of said body to compress at least one respective sealing member (28) between said first and second seal engaging members to urge said sealing member into engagement with said internal surface.

8. An apparatus according to claim 7, wherein at least one said first seal engaging member (18) is adapted to cooperate with at least one said second seal engaging member (20) to define a respective pair of surfaces diverging from each other in an increasing radial direction from said body (4).

9. An apparatus according to any one of the preceding claims, further comprising actuator means (50, 62) for causing a plurality of said anchor members and/or at least one said seal member to be urged into engagement with said internal surface.

10. An apparatus according to claim 9, wherein said actuator means comprises at least one first portion (62) adapted to be engaged by a user and at least one second portion (50) adapted to have an axial component of motion relative to the body as a result of engagement of said first portion by said user.

11. An apparatus according to any one of the preceding claims, further comprising at least one release element (48), offset from a radial centre of the apparatus in use, and adapted to be engaged by a user to release the apparatus from said internal surface.

12. An apparatus according to any of the preceding claims, further comprising at least one sealing member (28) adapted to be urged into engagement with said internal surface.

## Patentansprüche

1. Eine Verankerungsvorrichtung (2) zum Verankern eines Abdichtungselements (28) an einer Innenfläche eines gebogenen Rohrabschnitts, wobei die Vorrichtung Folgendes beinhaltet:
einen Körper (4);
eine Vielzahl von Verankerungselementen (36), die angepasst sind, relativ zu mindestens einem Teil des Körpers in den Eingriff mit einer Innenfläche eines gebogenen Rohrabschnitts bewegt zu werden;
ein Mittel für das Ineingriffbringen einer Dichtung (18, 20), um mindestens ein Abdichtungselement (28) in den Eingriff mit der Innenfläche zu drängen;
**dadurch gekennzeichnet, dass** sie ferner Folgendes beinhaltet:
mindestens eine konvexe Fläche (38), die auf mindestens einem ersten der Verankerungselemente (36) bereitgestellt ist und angepasst ist, durch Bewegung des entsprechenden besagten ersten Verankerungselements (36) in den Eingriff mit der Innenfläche in den Eingriff mit dem radial äußeren Teil der Innenfläche des gebogenen Rohrabschnitts gedrängt zu werden;
mindestens eine konkave Fläche (44), die auf mindestens einem zweiten der Verankerungselemente (36) bereitgestellt ist und angepasst ist, durch Bewegung des entsprechenden besagten zweiten Verankerungselements (36) in den Eingriff mit der Innenfläche in den Eingriff mit dem radial inneren Teil der Innenfläche des gebogenen Rohrabschnitts gedrängt zu werden, wobei die Vorrichtung (2) angepasst ist, mittels des Eingriffs mindestens einer besagten konvexen Fläche und mindestens einer besagten konkaven Fläche mit der Innenfläche in Eingriff mit der Innenfläche in Position gehalten zu werden.

2. Vorrichtung gemäß Anspruch 1, wobei eine Vielzahl der Verankerungselemente (36) relativ zu dem Körper verschiebbar befestigt ist und angepasst ist, mit mindestens einer jeweiligen geneigten Fläche auf dem Körper in Eingriff zu kommen, um sich in den Eingriff mit der Innenfläche zu bewegen.

3. Vorrichtung gemäß Anspruch 2, wobei der Körper (4) ein erstes Körperelement (6) und ein zweites Körperelement (10), das an dem ersten Körperelement axial verschiebbar befestigt ist und mindestens eine besagte geneigte Fläche (12) darauf aufweist, beinhaltet.

4. Vorrichtung gemäß einem der vorhergehenden Ansprüche, ferner beinhaltend ein Vorspannungsmittel (46), um mindestens ein besagtes Verankerungselement von der Innenfläche weg zu drängen.

5. Vorrichtung gemäß Anspruch 4, wobei das Vorspannungsmittel mindestens ein nachgebendes Element (46) zum Halten von mindestens einem besagten Verankerungselement auf dem Körper beinhaltet.

6. Vorrichtung gemäß einem der vorhergehenden Ansprüche, wobei der Körper (4) länglich ist.

7. Vorrichtung gemäß einem der vorhergehenden Ansprüche, wobei das Mittel für das Ineingriffbringen einer Dichtung (18, 20) mindestens ein erstes Element für das Ineingriffbringen einer Dichtung (18) und mindestens ein zweites Element für das Ineingriffbringen einer Dichtung (20), das angepasst ist, sich relativ zu mindestens einem Teil des Körpers axial zu verschieben, um mindestens ein jeweiliges Abdichtungselement (28) zwischen dem ersten und zweiten Element für das Ineingriffbringen einer Dichtung zusammenzudrücken, um das Abdichtungselement in den Eingriff mit der Innenfläche zu drängen, beinhaltet.

8. Vorrichtung gemäß Anspruch 7, wobei mindestens ein besagtes erstes Element für das Ineingriffbringen einer Dichtung (18) angepasst ist, mit mindestens einem besagten zweiten Element für das Ineingriffbringen einer Dichtung (20) zusammenzuarbeiten, um ein jeweiliges Paar Flächen zu definieren, die in einer zunehmenden radialen Richtung von dem Körper (4) voneinander divergieren.

9. Vorrichtung gemäß einem der vorhergehenden Ansprüche, ferner beinhaltend ein Betätigungsmittel (50, 62), um zu bewirken, dass eine Vielzahl der Verankerungselemente und/oder mindestens ein besagtes Abdichtungselement in den Eingriff mit der Innenfläche gedrängt werden.

10. Vorrichtung gemäß Anspruch 9, wobei das Betätigungsmittel mindestens einen ersten Anteil (62), der angepasst ist, von einem Nutzer in Eingriff gebracht zu werden, und mindestens einen zweiten Anteil (50), der angepasst ist, als Folge des Ineingriffbringens des ersten Anteils durch den Nutzer eine axiale Bewegungskomponente relativ zu dem Körper aufzuweisen, beinhaltet.

11. Vorrichtung gemäß einem der vorhergehenden Ansprüche, ferner beinhaltend mindestens ein Löseglied (48), das von einem radialen Zentrum der verwendeten Vorrichtung abgesetzt ist und angepasst ist, von einem Nutzer in Eingriff gebracht zu werden, um die Vorrichtung von der Innenfläche zu lösen.

12. Vorrichtung gemäß einem der vorhergehenden Ansprüche, ferner beinhaltend mindestens ein Abdichtungselement (28), das angepasst ist, in den Eingriff mit der Innenfläche gedrängt zu werden.

## Revendications

1. Un appareil d'ancrage (2) pour ancrer un organe d'étanchéité (28) à une surface interne d'une section courbe de tuyau, l'appareil comprenant :
un corps (4) ;
une pluralité d'organes d'ancrage (36) conçus pour être déplacés par rapport à au moins une partie du corps jusqu'en contact avec une surface interne d'une section courbe de tuyau ;
un moyen de mise en contact de joint d'étanchéité (18, 20) pour pousser au moins un organe d'étanchéité (28) jusqu'en contact avec ladite surface interne ;
**caractérisé en ce qu'**il comprend en outre :
au moins une surface convexe (38), ménagée sur au moins un premier desdits organes d'ancrage (36), et conçue pour être poussée jusqu'en contact avec la partie radialement extérieure de ladite surface interne de la section courbe de tuyau par déplacement dudit premier organe d'ancrage correspondant (36) jusqu'en contact avec ladite surface interne ;
au moins une surface concave (44), ménagée sur au moins un deuxième desdits organes d'ancrage (36), et conçue pour être poussée jusqu'en contact avec la partie radialement intérieure de ladite surface interne de la section courbe de tuyau par déplacement dudit deuxième organe d'ancrage correspondant (36) jusqu'en contact avec ladite surface interne, ledit appareil (2) étant conçu pour être retenu en position en contact avec ladite surface interne au moyen du contact d'au moins une dite surface convexe et d'au moins une dite surface concave avec ladite surface interne.

2. Un appareil selon la revendication 1, dans lequel une pluralité desdits organes d'ancrage (36) sont montés coulissants par rapport audit corps et sont conçus pour venir au contact d'au moins une surface inclinée respective sur ledit corps afin de se déplacer jusqu'en contact avec ladite surface interne.

3. Un appareil selon la revendication 2, dans lequel ledit corps (4) comprend un premier organe de corps (6) et un deuxième organe de corps (10) monté axialement coulissant sur ledit premier organe de corps et ayant au moins une dite surface inclinée (12) sur celui-ci.

4. Un appareil selon l'une quelconque des revendications précédentes, comprenant en outre un moyen de sollicitation (46) pour pousser au moins un dit organe d'ancrage à distance de ladite surface interne.

5. Un appareil selon la revendication 4, dans lequel ledit moyen de sollicitation comprend au moins un organe élastique (46) pour retenir au moins un dit organe d'ancrage sur ledit corps.

6. Un appareil selon l'une quelconque des revendications précédentes, dans lequel ledit corps (4) est allongé.

7. Un appareil selon l'une quelconque des revendications précédentes, dans lequel ledit moyen de mise en contact de joint d'étanchéité (18, 20) comprend au moins un premier organe de mise en contact de joint d'étanchéité (18) et au moins un deuxième organe de mise en contact de joint d'étanchéité (20) conçus pour coulisser axialement par rapport à au moins une partie dudit corps afin de comprimer au moins un organe d'étanchéité respectif (28) entre lesdits premier et deuxième organes de mise en contact de joint d'étanchéité pour pousser ledit organe d'étanchéité jusqu'en contact avec ladite surface interne.

8. Un appareil selon la revendication 7, dans lequel au moins un dit premier organe de mise en contact de joint d'étanchéité (18) est conçu pour coopérer avec au moins un dit deuxième organe de mise en contact de joint d'étanchéité (20) afin de définir une paire respective de surfaces s'écartant l'une de l'autre dans une direction de plus en plus radiale à partir dudit corps (4).

9. Un appareil selon l'une quelconque des revendications précédentes, comprenant en outre un moyen actionneur (50, 62) pour amener une pluralité desdits organes d'ancrage et/ou au moins un dit organe d'étanchéité à être poussés jusqu'en contact avec ladite surface interne.

10. Un appareil selon la revendication 9, dans lequel ledit moyen actionneur comprend au moins une première portion (62) conçue pour être entraînée par un utilisateur et au moins une deuxième portion (50) conçue pour avoir une composante axiale de déplacement par rapport au corps en résultat de l'entraînement de ladite première portion par ledit utilisateur.

11. Un appareil selon l'une quelconque des revendications précédentes, comprenant en outre au moins un élément de libération (48), décalé d'un centre radial de l'appareil lors de l'utilisation, et conçu pour être entraîné par un utilisateur afin de libérer l'appareil de ladite surface interne.

12. Un appareil selon l'une quelconque des revendications précédentes, comprenant en outre au moins un organe d'étanchéité (28) conçu pour être poussé jusqu'en contact avec ladite surface interne.
